# EUROPEAN PATENT SPECIFICATION

(11) **EP 3 861 086 B1**
(45) Date of publication and mention of the grant of the patent: **05.01.2022**
(21) Application number: 19795651.9
(22) Date of filing: 04.10.2019
(51) Int. Cl.: C09K 5/06

(54) **INERT MIXTURE AND USE THEREOF AS A PHASE CHANGE MATERIAL**
INERTE MISCHUNG UND IHRE VERWENDUNG ALS PHASENWECHSELMATERIAL
MÉLANGE INERTE ET UTILISATION CORRESPONDANTE EN TANT QUE MATÉRIAU À CHANGEMENT DE PHASE

(30) Priority: 05.10.2018 IT 201800009211
(43) Date of publication of application: 11.08.2021
(73) Proprietor: Groppalli S.r.l., 29010 Gragnano (IT)
(72) Inventor: NEGRISOLO, Francesco, 29010 Agazzano (IT); GROPPALLI, Luciano, 29010 Agazzano (IT)
(74) Representative: Masala, Gian Tomaso
(86) International application number: PCT/IB2019/058478
(87) International publication number: WO 2020/070708

(56) References cited:
- EP-A2- 0 722 997
- DE-A1- 2 832 670
- US-A- 5 785 885
- US-A- 5 976 400
- US-A1- 2016 090 520

## Description

### FIELD OF THE INVENTION

Thermal energy storage technologies make it possible to store energy from an external source (for example solar energy, but also residual thermal energy of a production process) so that it can then be used, even when the source itself is not available, either for generating electric energy or simply as a heating or cooling medium.

In recent years, various devices have been proposed that can store energy through heat exchange processes.

The invention relates to an inert mixture and use thereof for the storage of thermal energy.

### BACKGROUND

Thermal energy storage technologies respond to the need to allow the storage of energy from an external thermal source so that it can then be used either in processes of conversion to electric energy or in thermal processes as a heating or cooling medium, even when the external source is not available.

These technologies are, for example, used in solar thermal plants to store thermal energy from solar radiation and today represent one of the systems with which efforts are made to reduce the energy dependence of our society from traditional non-renewable resources, such as fossil fuels.

In recent years, various systems have been proposed to store thermal energy. In general, the strategy used is based on the use of a storage medium that stores the thermal energy acquired during the hours of availability of the external source and then makes the energy available during the hours in which the source itself is no longer able to supply it.

Among the main thermal energy storage systems, there are those storing thermal energy by heating or cooling a storage material from which, subsequently, the stored energy can be regained by heat exchange, in order to heat or cool or to produce electric energy.

Among the most studied and used thermal energy storage materials in recent years, there are phase change materials ("PCM"), which use a phase change process of the material to store thermal energy. The phase change takes place in well-defined and different temperature and pressure ranges for the different types of materials. In practice, PCMs whose phase change is at temperature ranges appropriate for the concerned application are chosen.

The phase change materials that are currently most studied are generally attributable to five distinct categories: that of paraffinic materials, that of fatty acids and esters, that of hydrated salts, that of eutectic mixtures of salts and that of polyols.

With respect to the materials that store thermal energy in the absence of phase transition and therefore with an increase in temperature ("sensitive energy"), phase change materials have the advantage of allowing, for the same volume used, the storage of a generally greater amount of thermal energy, as well as the possibility of making said energy available at well-defined temperature values, under substantially isothermal conditions, thus making the systems for reusing said energy more efficient.

On the other hand, the currently known phase change materials of the type referred to above may have some technological and functional limitations. In particular, the paraffinic phase change materials generally have a low thermal conductivity and, therefore, in some uses it is necessary to resort to additions and/or solutions which can reduce their efficiency and increase the costs of use. They also have a slow crystallization kinetics and a moderate flammability. The hydrated salts, on the other hand, have a generally higher thermal conductivity than the paraffinic materials and high phase transition energies, but have the disadvantage of being in many cases chemically aggressive towards the metal components of the devices in which they are used and being not very stable already after a few cycles of use due to the onset of phase segregation phenomena, requiring the addition of additives which, however, can reduce the energy storage capacity of the material.

Instead, phase change materials based on fatty acids and esters have high melting energy but a generally low thermal conductivity and are unstable at high temperatures and moderately flammable and corrosive.

The phase transition of eutectic mixtures of salts is at temperatures higher than those envisaged by the material of the present patent and which cannot be used in the envisaged applications.

Finally, polyols have a high thermal capacity but may be subject to significant sub-cooling phenomena, which lead to a deviation between the phase change temperature during heating (in which the material stores thermal energy) and the phase change temperature during cooling (in which the material returns the thermal energy). US5785885 describes a heat storage composition comprising a sugar alcohol and a supercooling inhibitor.

The primary aim of the present invention is therefore to identify a new type of materials capable of reducing and/or solving the aforementioned drawbacks.

### SUMMARY OF THE INVENTION

In accordance with the present invention, the Applicant has surprisingly found that these desired characteristics can be achieved by providing an inert mixture comprising at least one appropriately identified polyol and at least one appropriately identified salt, wherein the molar ratio of the at least one polyol to the at least one inorganic salt is maintained within a specific range.

Therefore, in a first aspect thereof the present invention relates to an inert mixture comprising:
- at least one polyol selected from the group consisting of: glycerol, erythritol, mannitol, pentaerythritol, xylitol, dulcitol, sorbitol, ribitol, maltitol, and inositol;
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate; and

- at least one nucleating agent selected from the group consisting of carbon powder, metal powder, and silicon carbide;
wherein:
- the molar ratio of the at least one polyol to the at least one inorganic salt is in the range from 99:1 to 50:50; and
- the at least one nucleating agent is present in the form of particles having a size in the range from 1 to 50 microns, measured by the laser diffractometry method according to the ISO standard 13320:2009 (E).

It has indeed been surprisingly discovered that by providing such an inert mixture, in which at least one polyol as defined herein and at least one salt soluble in said polyol as defined herein are present in a specific range of molar ratios in the presence of at least one nucleating agent it is possible to obtain an inert material capable of reducing and/or solving the aforementioned drawbacks of the traditional phase change materials. The inert mixture has in fact a wide temperature window of use, from - 40 °C to 200 °C, a high phase change energy, in particular a phase change energy greater than the polyol alone, as well as high thermal conductivity, high chemical stability, characteristics of chemical inertia as well as absence of significant sub-cooling phenomena.

The Applicant has in fact surprisingly found that the combined use of at least one salt soluble in said polyol and of at least one nucleating agent makes it possible to act synergistically and modify the thermal properties of the polyol so as to improve them, by at the same time guaranteeing them stability over time which allows obtaining a phase change material with improved characteristics with respect to traditional materials.

In a preferred aspect of the invention, the inert mixture according to the present invention comprises:
- at least one polyol selected from the group consisting of: glycerol, erythritol, mannitol, pentaerythritol, dulcitol, sorbitol, maltitol, and inositol; and
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate;
wherein the molar ratio of the at least one polyol to the at least one inorganic salt is in the range from 99:1 to 60:40.

Advantageously, such a mixture has a high phase change energy, high chemical stability, characteristics of chemical inertia as well as absence of significant sub-cooling phenomena in a temperature range comprised between 45 °C to 200 °C. This makes said mixture particularly suitable to be used to store thermal energy in the sector of electric energy production and steam production.

In a further preferred aspect of the invention, the inert mixture according to the present invention comprises:
- at least one polyol selected from the group consisting of: glycerol, erythritol, xylitol, sorbitol, ribitol, maltitol, inositol; and
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate;
wherein the molar ratio of the at least one polyol to the at least one inorganic salt is in the range from 99:1 to 50:50.

Advantageously, such a mixture has a high phase change energy, high thermal conductivity and high chemical stability in a temperature range comprised between -40 °C to 45°C. This makes the mixture particularly suitable to be used to store thermal energy in the building and air-conditioning sectors or as a storage of refrigeration units for refrigeration / conditioning apparatuses.

In a further aspect, the present invention also relates to the use of the inert mixture according to the present invention to store thermal energy.

Thanks to the aforementioned properties, in fact, the inert mixture according to the present invention is effectively usable for storing thermal energy.

In a preferred embodiment of said aspect, the present invention relates to the use of the inert mixture according to the present invention as a phase change material.

Thanks to the specific combination of components thereof, the inert mixture according to the present invention in fact has at least one phase transition in a window of temperatures normally used in thermal energy storage devices, which makes the use thereof as a phase change material particularly advantageous. Advantageously, the inert mixture according to the present invention has at least one phase transition in the temperature range from -40 °C to 200 °C.

### BRIEF DESCRIPTION OF THE DRAWINGS

In the drawings:
- Figure 1 shows the calorimetric trace in the heating phase and in the cooling phase of the inert mixture according to Example 1;
- Figure 2 shows the calorimetric trace in the heating phase and in the cooling phase of the inert mixture according to Example 2;
- Figure 3 shows the calorimetric trace in the heating phase and in the cooling phase of the inert mixture according to Example 3; and
- Figure 4 is a schematic view of a thermal energy storage module operating with a mixture according to the invention;
- Figure 5 is a schematic view of a thermal energy storage device comprising a plurality of energy storage modules according to the invention; and
- Figure 6 is a schematic view of a plant comprising a thermal energy storage device according to the invention.

### DETAILED DESCRIPTION OF THE INVENTION

The present invention can have, in one or more of its aspects, one or more of the preferred characteristics set forth below, which can be combined as desired between them according to the application requirements.

Within the scope of the present invention a new type of material has been identified whose energy characteristics linked to a phase change, make the use thereof particularly effective as a phase change material, in particular for applications related to the storage of thermal energy.

Therefore, in a first aspect thereof the present invention relates to an inert mixture comprising:
- at least one polyol selected from the group consisting of: glycerol, erythritol, mannitol, pentaerythritol, xylitol, dulcitol, sorbitol, ribitol, maltitol, and inositol;
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate; and
- at least one nucleating agent selected from the group consisting of carbon powder, metal powder, and silicon carbide;
wherein:
- the molar ratio of the at least one polyol to the at least one inorganic salt is in the range from 99:1 to 50:50; and
- the at least one nucleating agent is present in the form of particles having a size in the range from 1 to 50 microns, measured by the laser diffractometry method according to the ISO standard 13320:2009 (E).

In the present invention when the definition is used:
- "Inert mixture" means a mixture which under its normal conditions of use does not give rise to chemical reactions among its components;
- "Normal conditions of use" means a window of temperatures in the range of Phase change temperature -40 °C to Phase change temperature 200 °C;
- "Inorganic salt" means an ionic compound comprising one or more mono- or polyvalent cations and one or more mono- or polyvalent anions, in which said cations and anions are both of an inorganic nature; and
- "inorganic salt soluble in said polyol" means an inorganic salt capable of forming, when added to at least one polyol according to the present invention in an amount of at least 2% by weight with respect to the sum of the weight of salt and polyol, with said polyol a molten mixture in homogeneous phase, after heating up to a temperature at least equal to the melting temperature of said mixture.

Without thereby wishing to be linked to a specific theory, it is believed that thanks to the specific physical interaction between the types of components of the mixture according to the present invention a material is obtained provided with characteristics of usability window, phase change energy, thermal conductivity, chemical stability, characteristics of chemical inertia as well as absence of significant sub-cooling phenomena, which make the use thereof particularly effective as a phase change material and in applications related to the storage of thermal energy, for example for heating and cooling processes even at temperatures below zero degrees centigrade.

In particular, the Applicant has in fact surprisingly found that the combined use of at least one salt soluble in said polyol and of at least one nucleating agent makes it possible to act synergistically and modify the thermal properties of the polyol so as to improve them, by at the same time guaranteeing them stability over time which allows obtaining a phase change material with improved characteristics with respect to traditional materials.

The inert mixture according to the present invention comprises at least one polyol selected from the group consisting of: glycerol, erythritol, mannitol, pentaerythritol, xylitol, dulcitol, sorbitol, ribitol, maltitol, and inositol.

Preferably, the at least one polyol is selected from the group consisting of: glycerol, erythritol, mannitol, pentaerythritol, and inositol. More preferably, the at least one polyol is selected from the group consisting of glycerol, pentaerythritol, erythritol, and mannitol. Even more preferably, the at least one polyol is selected from the group consisting of erythritol, and mannitol.

In a preferred embodiment, the at least one polyol selected from the group consisting of: glycerol, erythritol, mannitol, pentaerythritol, dulcitol, sorbitol, maltitol, and inositol. More preferably, when the at least one polyol is selected from said group, the molar ratio of the at least one polyol to the at least one inorganic salt is in the range from 99:1 to 60:40.

This makes such an inert mixture particularly suitable to be used to store thermal energy in the sector of electric energy production and steam production, advantageously having the same a high phase change energy, high chemical stability, characteristics of chemical inertia as well as absence of significant sub-cooling phenomena in a temperature window comprised between 45 °C and 200 °C.

In a preferred embodiment, the at least one polyol is selected from the group consisting of: glycerol, erythritol, xylitol, sorbitol, ribitol, maltitol, inositol. More preferably, when the at least one polyol is selected from said group, the molar ratio of the at least one polyol to the at least one inorganic salt is in the range from 99:1 to 50:50.

This makes such a mixture particularly suitable to be used to store thermal energy in the building and air-conditioning sectors or as a storage of refrigeration units for refrigeration/conditioning devices, advantageously having the same a high phase change energy, high thermal conductivity, high chemical stability in a temperature window comprised between -40 °C and 45 °C.

The inert mixture according to the present invention comprises at least one inorganic salt soluble in the at least one polyol according to the invention, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate.

Preferably, the at least one metal is selected from the group consisting of: lithium, sodium, potassium, strontium, barium, titanium, vanadium, chromium, manganese, iron, cobalt, nickel, and copper. More preferably, the at least one metal is selected from the group consisting of: lithium, sodium, potassium, and iron.

Preferably, in the inert mixture according to the present invention the anion of the at least one inorganic salt soluble in the at least one polyol according to the invention is selected from the group consisting of: a halide, and a sulfate, more preferably selected from the group consisting of: a halide.

In a particularly preferred embodiment, the at least one inorganic salt is a chloride or a sulfate of at least one metal selected from the group consisting of: lithium, sodium, potassium. Examples of said at least one inorganic salt according to said particularly preferred embodiment are: lithium chloride, lithium sulfate, sodium chloride, potassium chloride, sodium sulfate, potassium sulphate, potassium aluminium sulphate.

Other inorganic salts advantageously usable in the mixture according to the invention are magnesium chloride and calcium chloride.

Preferably, the at least one inorganic salt soluble in the at least one polyol according to the present invention has a melting enthalpy equal to or greater than 300 kJ/kg.

In the context of the present invention it has in fact been found that the use of one or more of said inorganic salts soluble in the at least one polyol according to the present invention in the inert mixture according to the present invention allows obtaining a mixture having a phase change energy greater than the values obtainable from an identical amount of the at least one polyol.

Preferably and advantageously, in the mixture according to the present invention the molar ratio of the at least one polyol to the at least one inorganic salt soluble in said polyol is in the range from 99:1 to 60:40, more preferably in the range from 99:1 to 70:30, even more preferably in the range from 91:1 to 75:25.

The inert mixture according to the present invention comprises at least one nucleating agent selected from the group consisting of carbon powder, metal powder, and silicon carbide.

Although the inert mixture according to the present invention does not have significant sub-cooling phenomena under normal conditions of use, at least one nucleating agent is present in the inert mixture itself, so as to further improve the characteristics of the phase change, such as for example the crystallization kinetics and the global thermal conductivity value thereof.

The at least one nucleating agent is selected from the group consisting of carbon powder, metal powder. Preferably, said carbon powder is selected from the group consisting of: graphite, carbon black, graphene, nanotubes.

The at least one nucleating agent is present in the form of particles having a size in the range from 1 to 50 microns, more preferably in the range from 5 to 20 microns, measured by the laser diffractometry method according to the ISO standard 13320:2009 (E).

Preferably, the at least one nucleating agent is present in an amount in the range from 0.2% to 20% by weight, more preferably in the range from 5% to 10% by weight, with respect to the total weight of the inert mixture.

Said amount has in fact been found to be optimal for obtaining an increase in the crystallization kinetics and in the thermal conductivity value of the inert mixture.

Advantageously, the inert mixture according to the present invention shows phase transition enthalpy values which make the use thereof particularly effective as a phase change material in applications related to the storage of thermal energy.

Preferably the inert mixture according to the present invention has a phase transition enthalpy equal to or greater than 150 kJ/kg, more preferably equal to or greater than 200 kJ/kg. Said enthalpy value can be determined by means of a calorimetric measurement using a differential scanning calorimeter, equipped with a measuring chamber in nitrogen flow (nitrogen flow = 15 mL/min) and operating at an up and down ramp speed of 2°C/min.

A tool suitable for making this measurement is, for example, the DSC3 star system (Toledo Mettler) tool. To carry out this measurement, a mass sample of about 5-8 mg can advantageously be used, placed on aluminum crucibles sealed with an aluminum cover.

It has been unexpectedly found that said phase transition enthalpy value is particularly indicated for applications of the inert mixture according to the present invention in the sector of thermal energy storage technologies, in particular in the sector of solar thermal energy storage.

Thanks to the specific combination of the types of components mentioned above, in particular of the at least one polyol and the at least one inorganic salt as defined above, the inert mixture according to the present invention has at least one phase transition in a window of temperatures under normal conditions of use of the thermal energy storage devices.

Preferably, the inert mixture according to the present invention has at least one phase transition in the temperature range from -40 °C to 200 °C.

Preferably the at least one phase transition is of the solid-liquid or solid-solid type.

The mixture according to the present invention can be prepared by a method which comprises the steps of:
- providing at least one polyol selected from the group consisting of: glycerol, erythritol, mannitol, pentaerythritol, xylitol, dulcitol, sorbitol, ribitol, maltitol, and inositol;
- providing at least one inorganic salt soluble in the at least one polyol according to the invention, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate;
- adding at least one nucleating agent selected from the group consisting of carbon powder, metal powder, and silicon carbide; and
- mixing the at least one polyol, the at least one inorganic salt and the at least one nucleating agent, in wherein the at least one polyol and the at least one inorganic salt are in a molar ratio in the range from 99:1 to 50:50.

Preferably, the method for preparing the mixture according to the present invention comprises the step of: - heating the inert mixture up to a temperature at least equal to its melting temperature.

Preferably, the step of heating the mixture is carried out in the presence of a controlled atmosphere, more preferably in an inert atmosphere.

Preferably, the method for preparing the mixture according to the present invention comprises the step of: - regulating the water content of the inert mixture.

In a preferred embodiment, said step of regulating the water content of the inert mixture, comprises: regulating the water content of the inert mixture to a water content equal to or less than 2% by moles, more preferably equal to or less than 1% by moles, with respect to the total moles of the inert mixture.

In a further preferred embodiment, said step of regulating the water content of the inert mixture, comprises: regulating the water content of the inert mixture to a water content from 1% to 35% by moles, with respect to the total moles of the inert mixture.

Preferably, said step of regulating the water content of the inert mixture can be advantageously carried out by regulating the water content of the single components both before mixing and after mixing thereof, according to any method known to the person skilled in the art for this purpose.

Preferably, the at least one nucleating agent is added in an amount in the range from 0.2% to 20% by weight, more preferably in the range from 5% to 10% by weight, with respect to the total weight of the inert mixture.

Preferably, the addition of the at least one nucleating agent is carried out on the mixture in the molten state.

In a further aspect, the present invention relates to the use of the inert mixture according to the present invention to store thermal energy.

Thanks to the aforementioned properties, in fact, the inert mixture according to the present invention is effectively usable for storing thermal energy.

The inert mixture according to the present invention, thanks to its characteristics, allows storing large amounts of thermal energy and then makes it available in a controllable manner, for example by means of heat exchange.

In other words, in the context of this aspect the present invention relates to a method for storing thermal energy which envisages the use of the inert mixture according to the present invention.

Preferably, in said use, the inert mixture according to the present invention stores thermal energy in a temperature window comprised between -45 °C and 200 °C.

Preferably, in said use the thermal energy is selected from the group consisting of: thermal solar energy or residual energy of a production process, and a combination thereof. More preferably in said use the thermal energy is solar thermal energy.

In a preferred embodiment of said aspect, the present invention relates to the use of the inert mixture according to the present invention as a phase change material.

Thanks to the specific combination of components thereof, the inert mixture according to the present invention has at least one phase transition in a window of temperatures normally used in thermal energy storage devices, which makes the use thereof as a phase change material particularly advantageous. Advantageously, the inert mixture according to the present invention has at least one phase transition in the temperature range from -40 °C to 200 °C.

Phase change materials can be used in all those sectors where it is intended to use a storage medium that stores thermal energy to then make it available in a controllable way by heat exchange, such as the building sector, where the phase change materials can for example be used to thermally regulate the environments, of air-conditioning, electric energy production, steam production.

Preferably, in said use the inert mixture according to the present invention is used as a phase change material. More preferably, in said use the inert mixture according to the present invention is used as a phase change material in the building, air-conditioning, electric energy production and steam production sectors.

Preferably, when used in the building sector, the inert mixture according to the present invention is used by being placed in at least one chamber internal to the masonry, thus advantageously absorbing the excess thermal energy coming from the outside during the day and then releasing it at night.

Preferably, when used in the air-conditioning sector, the inert mixture according to the present invention is used as a thermal energy reserve for heat pumps or for feeding absorption chillers for the production of refrigeration units.

Preferably, when used in the sector of electric energy production the inert mixture according to the present invention is used to make constant the production of a Rankine cycle, preferably with organic fluid.

In a preferred aspect of the invention, the inert mixture according to the present invention comprises:
- at least one polyol selected from the group consisting of: glycerol, erythritol, mannitol, pentaerythritol, dulcitol, sorbitol, maltitol, and inositol; and
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate;
wherein the molar ratio of the at least one polyol to the at least one inorganic salt is in the range from 99:1 to 60:40.

Advantageously, such a mixture has a high phase change energy, high thermal conductivity, high chemical stability, characteristics of chemical inertia as well as absence of significant sub-cooling phenomena in a temperature window comprised between 45 °C to 200 °C. This makes the mixture particularly suitable to be used to store thermal energy.

Preferably, in said mixture the at least one polyol comprises an amount of glycerol equal to or less than 5% by moles, more preferably less than 2% by moles, with respect to the total moles of the at least one polyol.

It has in fact been found that the use of said amount of glycerol allows intervening on at least one characteristic of the inert mixture according to the present invention, preferably on the phase transition temperature of said phase change in said temperature window, without compromising the other properties of the same.

Preferably, said mixture has a water content equal to or less than 2% by moles, more preferably equal to or less than 1% by moles, even more preferably equal to or less than 0.5% by moles, with respect to the total moles of the inert mixture.

When the inert mixture has such a water content, in fact, it can be subjected to phase change cycles in a temperature window comprised between 45 °C and 200 °C without encountering any significant degradation phenomena and loss of performance as regards the maintenance of the phase change conditions, in terms for example of temperature or energy thereof. This leads to obtaining a longer useful life of the inert mixture with respect to similar mixtures having a water content higher than the one identified herein, when the same is used as a phase change material to store thermal energy. A greater useful life of the inert mixture, under conditions of substantial constancy of the temperature and/or of phase change energy, allows using the same more efficiently for the storage of thermal energy and therefore leads to the realisation of devices and to the implementation of more efficient thermal energy storage methods.

Preferably, in one aspect of the invention, said mixture is used to store thermal energy in a temperature window comprised between 45 °C and 200 °C, more preferably as a phase change material.

In a preferred aspect of the invention, the inert mixture according to the present invention comprises:
- at least one polyol selected from the group consisting of: glycerol, erythritol, xylitol, sorbitol, ribitol, maltitol, inositol; and
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate;
wherein the molar ratio of the at least one polyol to the at least one inorganic salt is in the range from 99:1 to 50:50.

Advantageously, such a mixture has a high phase change energy, high thermal conductivity, high chemical stability, characteristics of chemical inertia as well as absence of significant sub-cooling phenomena in a window of temperature between -40 °C and 45 °C. This makes said mixture particularly suitable to be used to store thermal energy in the building and air-conditioning sectors.

Preferably, in said mixture the at least one polyol comprises an amount of glycerol greater than or less than 10% by moles, more preferably greater than 20% by moles, with respect to the total moles of the at least one polyol. In a particularly preferred embodiment, in said mixture the at least one polyol is glycerol.

Preferably, said mixture has a water content ranging from 10% to 40% by moles, more preferably from 20% to 40% by moles, with respect to the total moles of the inert mixture.

It has in fact been found that the use of said amount of water contributes to dissolving the at least one inorganic salt in the mixture without generating significant degradation phenomena and loss of performance as regards the maintenance of the phase change conditions in a temperature window comprised between -40 °C and 45 °C. This leads to obtaining a mixture with high phase change energy and makes the latter particularly suitable to be used to store thermal energy in the building and air-conditioning sectors.

Preferably, in one aspect of the invention, said mixture is used to store thermal energy in a temperature window comprised between -40 °C and 45°C, more preferably as a phase change material.

The present invention relates, in a further aspect thereof, to a thermal energy storage module 10 operating with the mixture M according to the present invention. This storage module 10 comprises a container 15 provided with an inlet section 16 and an outlet section 17 for the circulation of a carrier fluid Fv adapted to heat or to be heated by said inert mixture M. This latter is contained inside containment means 20 located inside the container 15 so as to be in thermal contact with the carrier fluid Fv to allow the transmission of thermal energy from the carrier fluid Fv to the mixture M or vice versa.

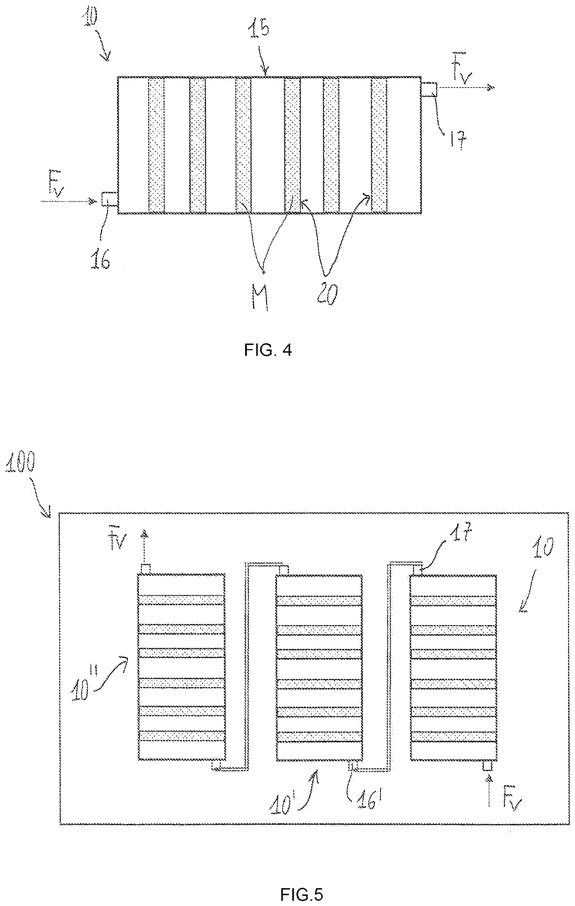

According to a first possible embodiment (schematized in Figure 4), the containment means 20 can be formed by a plurality of hollow bodies partially or totally filled by the inert mixture M and placed within the volume defined by the container 15. According to a first embodiment method, these hollow bodies are filled with the same inert mixture. In an alternative embodiment, the plurality of bodies can be subdivided into groups and in which the bodies of each group contain the same inert mixture having a window of temperatures of use different from that of the mixture contained in the bodies of the other groups.

In general, the storage module according to the invention is able to effectively store thermal energy, by heating or cooling the inert mixture according to the present invention, from which, subsequently, the stored energy can be regained by heat exchange, in order to heat or cool or to produce electric energy.

The present invention also relates to a thermal energy storage device 100 comprising a plurality of modules 10,10',10", each having a structure according to what has just been indicated above and operating with an inert mixture according to the invention. As schematized in Figure 5, these modules 10,10', 10" are hydraulically connected between them so that the carrier fluid circulates in each of them between the corresponding inlet and outlet sections of the relative container. In particular, the outlet section 17 of a first module 10 can be hydraulically connected to the input section 16' of a second module 10' preferably in a removable manner so as to allow the possible removal of the connection should one of the two modules not be necessary.

In a possible variant embodiment, at least one module of said plurality of modules 10, 10',10" comprises containment means 20 filled, at least partially, with an inert mixture according to the invention having a window of use, and preferably not superimposed, different from that relative to the other modules.

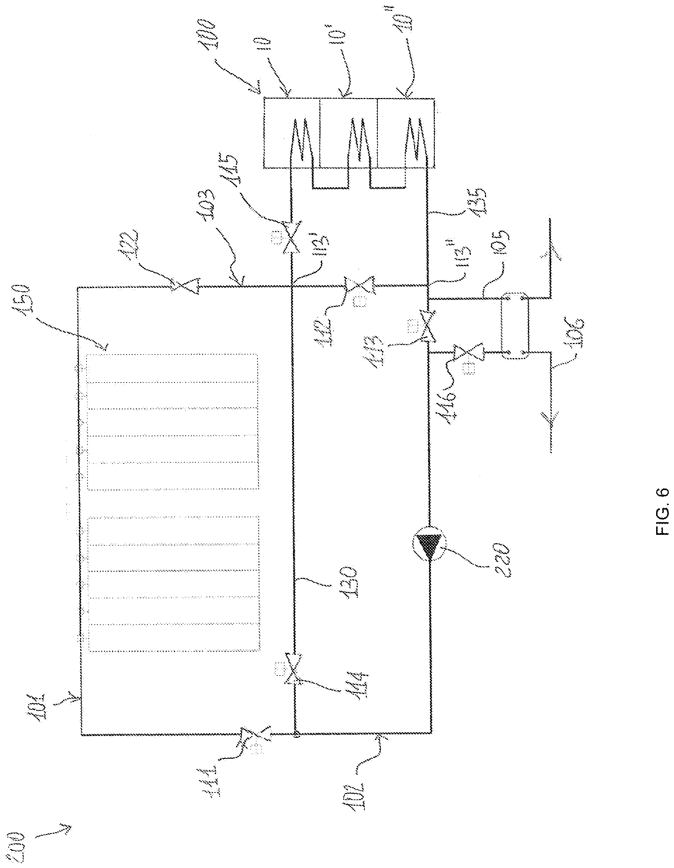

In a further aspect, the present invention also relates to a plant 200 comprising a thermal energy storage device 100 according to the invention. In this regard, Figure 6 is a view relative to a possible embodiment of a plant. With reference to this Figure, the plant comprises a circuit for the circulation of a carrier fluid which is heated through heating means 150. The latter preferably comprise a battery of solar collectors which heat the carrier fluid while the same circulates along a first circuit stretch 101. A circulating pump 220 is envisaged for the circulation of the carrier fluid Fv in the circuit. A second circuit stretch 102 connects the delivery of the pump with the circulation pump 220 with the first circuit stretch 101. A third circuit stretch 103 connects the first circuit stretch 101 to the intake of the circulation pump 220, on the opposite side with respect to the second circuit stretch 102. A first shut-off valve 111 is arranged along the first circuit stretch 101, while a non-return valve 122 is installed between the first circuit stretch 101 and the third circuit stretch 103. A second shut-off valve 112 and a third shut-off valve 113 are then installed along the third circuit stretch 103.

The circuit according to the invention comprises a first bypass line 130 which connects the second circuit stretch 102, in a position comprised between the delivery of the pump 220 and the first valve 111, to the third circuit stretch 103 in a position comprised between the non-return valve 122 and the second shut-off valve 112. A fourth shut-off valve 114 is arranged along the first bypass line 130.

The circuit also comprises a branch 135 along which an energy storage device 100 according to the invention is arranged, in particular in the non-exclusive embodiment indicated above in the commentary to Figure 5. The branch 135 extends between two points of the third circuit stretch 103, a first point 113' of which is comprised between the non-return valve 122 and the second shut-off valve 112, while the other point 113" is comprised between the second shut-off valve 112 and the third shut-off valve 113. A fifth shut-off valve 115 is installed along the branch 135 upstream of the storage device 100, i.e. between the point 113' and the storage device 100.

The storage device 1 comprises a plurality of modules 10, 10', 10", each of which containing an inert mixture according to the present invention and in which for each of said modules 10, 10', 10" the corresponding inert mixture has a window of temperatures different from that of the mixture envisaged in the other modules. Consequently, for each of said modules 10,10',10" containment means of the corresponding inert mixture are envisaged. Alternatively, two modules 10,10' can operate with an inert mixture having a first window of use (for example between 80-90 °C), while the remaining module 10" operates with a mixture having a different second window of use (for example 45-52 °C).

The modules 10,10',10" are hydraulically connected so as to allow the circulation in the same of the same carrier fluid. In other words, from the inlet section to the outlet section of the device, the carrier fluid circulates so as to heat, or to be heated, by the containment means of the mixture provided in each module.

The circuit of the plant 200 also comprises a delivery line 105 through which the carrier fluid reaches the utilities (not shown). This delivery line 105 extends from the third circuit stretch 103 in an intermediate position between the point 113" and the third shut-off valve 113.

The circuit of the plant 200 also comprises a return line 106 of the carrier fluid which branches from the second circuit stretch 102 from a position comprised between the circulation pump 220 and the third shut-off valve 113. The return line 106 allows the return of the carrier fluid Fv from the utilities to the circuit and provides for a fifth shut-off valve 116.

The plant 200 described above can operate in different modes. In a first operating mode, the energy modules 10,10',10" are "charged", i.e. the inert mixture is brought to the liquid state as a result of a heat exchange with the carrier fluid heated by the heating means 150. In this way, the modules 10,10',10' store thermal energy which will then be released. To "*charge*" the modules 10,10',10", the second shut-off valve 112, the fourth shut-off valve 114 and the sixth shut-off valve 116 are closed, while the other valves are activated (open). In this way, the carrier fluid Fv pushed by the pump 220 passes through the first circuit stretch 101 to be heated and as a result of this heating passes through the storage device 100 to charge the mixtures contained in its modules 10,10',10" with thermal energy. In this first mode the utilities are therefore excluded and the modules 10,10',10" will be charged starting from the one with the lowest temperatures of use. Subsequently, as the temperature of the circuit increases, the other modules 10, 10',10" having higher temperatures of use will be charged.

In a second mode of use of the plant, instead, the thermal energy stored in the modules 10,10',10" is used, by sending the carrier fluid to the utilities. In this case, the first shut-off valve 111 and the second shut-off valve 112 remain closed so as to exclude the first circuit stretch 101. In this case, the carrier fluid delivered by the pump 220 passes through the bypass line 130 and subsequently the storage device 100. The carrier fluid, crossing the latter, is heated by the thermal energy that is released by the storage modules 10,10',10". The carrier fluid, once heated, is diverted to the utilities due to the closure of the third shut-off valve 113. By analogy with what happens in the first operating mode, the carrier fluid, by crossing the modules 10, 10', 10", is heated first by the modules operating at higher temperature and then by those with lower temperatures of use.

The configuration of the described plant also allows a third operating mode in which the carrier fluid sent to the utilities is heated by the heating means 150 and in which the storage device 100 is excluded from the hydraulic circuit. To achieve this condition, the closure of the fourth shut-off valve 114, of the fifth shut-off valve 115 and of the third shut-off valve 113 is envisaged. This further operating mode can advantageously be implemented when the modules 10,10',10" are fully charged and energy is still available for the heating means 150 or when there is a need to bring the carrier fluid to the highest possible temperature. In fact, this third mode allows the energy stored in the device 100 to be preserved and to use it when it is most useful.

In a further aspect, the present invention also relates to a method for storing thermal energy which comprises the use of the device according to the present invention. In a preferred embodiment thereof, the method according to the invention provides for the steps of:
a) transferring thermal energy to the carrier fluid through heating means;
b) carrying out a first heat exchange between said carrier fluid, at a higher temperature, and the mixture, at lower temperature, contained in the storage modules of said device according to the invention so as to charge said modules with thermal energy;

Preferably, in said method the thermal energy is selected from the group consisting of: thermal solar energy, residual process thermal energy, and a combination thereof. More preferably in said method the thermal energy is solar thermal energy.

Preferably, said method finds application in the building sector, in the air-conditioning sector, in the sector of the electric energy production, in the steam production.

Preferably, in said method the thermal energy is selected from the group consisting of: thermal solar energy, residual process thermal energy, and a combination thereof. More preferably in said method the thermal energy is solar thermal energy.

### EXPERIMENTAL PART

The invention is now illustrated by means of some Examples to be understood for illustrative and non-limiting purposes.

### Example 1

30 grams of 99% food grade mannitol (QINGDAO BOZEWON INTERNATIONAL TRADE CO.) and 6 grams of pharmaceutical grade sodium chloride with purity ≥ 99% (Merck) after being dehydrated up to a constant weight were placed in a laboratory flask and mixed. The mixture was then heated to 156 °C in a nitrogen atmosphere and kept at a temperature of 140 °C for 30 minutes, continuing the mixing. Subsequently, 4 grams of graphite powder (size <10 microns, MG1596 - Sinograf) was added, continuing the mixing.

The inert mixture thus obtained was then cooled to room temperature and one sample thereof was characterized to determine its thermal characteristics by means of a star system DSC3 calorimeter of Toledo Mettler operating under the following conditions: measuring chamber in nitrogen flow equal to 15 mL/min; up and down ramp speed 2°C/min. For the measurement, a mass sample of about 5-8 mg is placed on aluminum crucibles sealed with an aluminum cover.

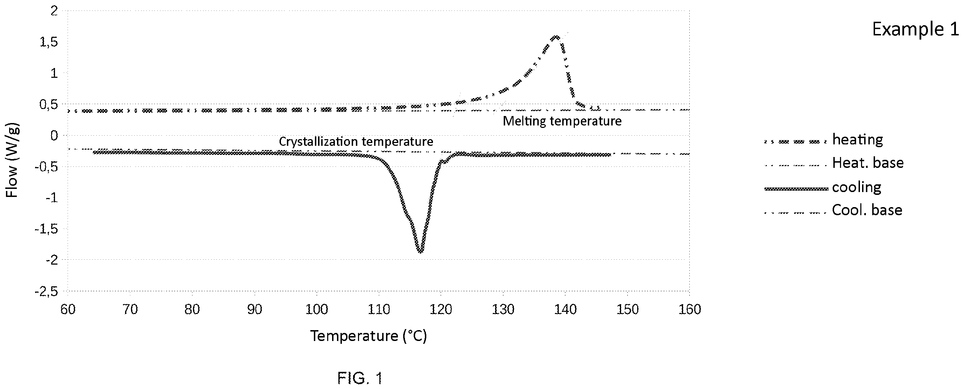

Figure 1 shows the calorimetric trace obtained, both in the heating and cooling phases.

Finally, Table 1 reports the values of melting temperature, of crystallization, melting enthalpy and crystallization enthalpy of the inert mixture obtained, determined by means of said characterization.

### Example 2

35 grams of 99% food grade erythritol (QINGDAO BOZEWON INTERNATIONAL TRADE CO.), 2 grams of glycerol purity ≥ 99% (Merck), 9 grams of 99% food grade mannitol (QINGDAO BOZEWON INTERNATIONAL TRADE CO) and 2.1 grams of sodium chloride pharmaceutical grade with purity ≥ 99% (Merck) after being dehydrated up to a constant weight were placed in a laboratory flask and mixed. The mixture was then heated to 120°C in a nitrogen atmosphere and kept at a temperature of 115 °C for 30 minutes, continuing the mixing. Subsequently, 5 grams of graphite powder (size <10 microns, MG1596 - Sinograf) were added, continuing the mixing.

The inert mixture thus obtained was then cooled to room temperature and one sample thereof was characterized to determine its thermal characteristics, with the same methods indicated for the inert mixture according to Example 1.

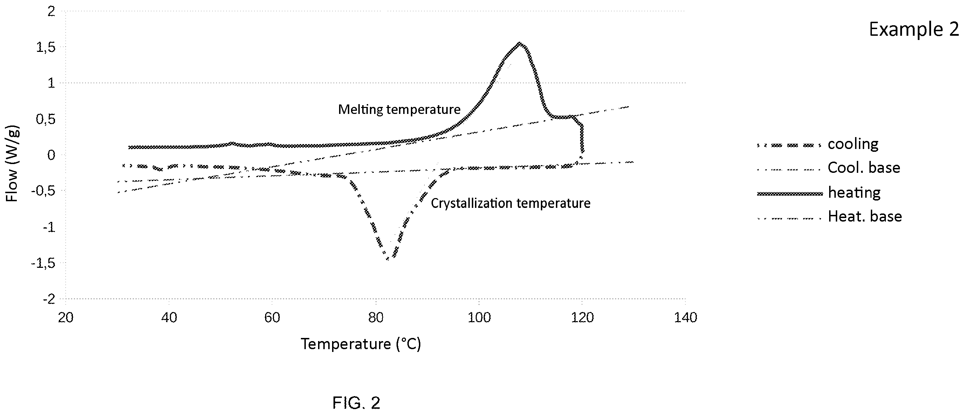

Figure 2 shows the calorimetric trace obtained, both in the heating and cooling phases.

Finally, Table 1 reports the values of melting temperature, of crystallization, melting enthalpy and crystallization enthalpy of the inert mixture obtained, determined by means of said characterization.

### Example 3

25 grams of glycerol purity ≥ 99% (Merck), 2 grams of Xylitol pharmaceutical grade ≥ 99% (A.C.E.F.), 1 gram of KAl(SO₄)₂ purity ≥ 99% (A.C.E.F.), 1.7 grams of KCI pharmaceutical grade ≥ 99% (A.C.E.F.) suitably dehydrated as previously described in Examples 1 and 2, and 6 grams of distilled water, so as to obtain a mixture having a glycerol/water ratio by weight of 80/20, were placed in a laboratory flask and mixed. The mixture was then heated to 90°C in a nitrogen atmosphere and kept at a temperature of 40 °C for 30 minutes, continuing the mixing. Subsequently, 3 grams of graphite powder (size <10 microns, MG1596 - Sinograf) were added, continuing the mixing.

The inert mixture thus obtained was then cooled up to 5°C and one sample thereof was characterized to determine its thermal characteristics, with the same methods indicated for the inert mixture according to Example 1.

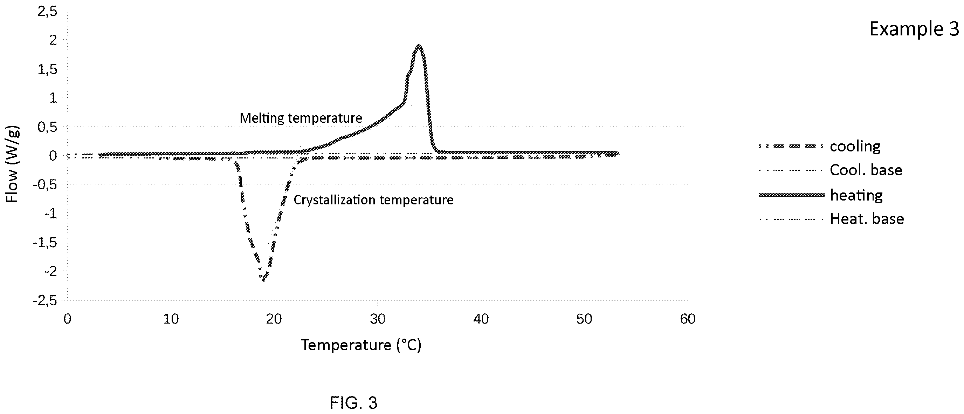

Figure 3 shows the calorimetric trace obtained, both in the heating and cooling phases.

Finally, Table 1 reports the values of melting temperature, of crystallization, melting enthalpy and crystallization enthalpy of the inert mixture obtained, determined by means of said characterization.

**TABLE 1**

| Example | Melting temperature (°C) | Crystallization temperature (°C) | Fusion enthalpy | | Crystallization enthalpy | |
|---|---|---|---|---|---|---|
| | | | KJ/Kg | KJ/litre | KJ/Kg | KJ/litre |
| Example 1 | 125-135 | 118-115 | 323 | 503 | 312 | 486 |
| 99% pure Mannitol (1) | 162 | 162 - 158 | 307.9 | 459 | | |
| Example 2 | 97 - 108 | 95 - 82 | 342 | 550 | 334 | 537 |
| Example 3 | 24-36 | 16 -23 | 223 | 286 | 211 | 269 |
| Glycerol/water mixture 80/20 by weight ⁽²⁾ | -20 | -17 | 191 | 210 | | |

| | | | | | | |
|---|---|---|---|---|---|---|
| (1) datum taken from Barone e Della Gatta, 1990; , Ferro D., and Piacente, V., Enthalpies and entropies of sublimation, vaporization and fusion of nine polyhydric alcohols, J. Chem. Soc., Faraday Trans., 1990, 86(1), 75-79; (2) datum taken from "Physical properties of glycerine and its solutions" (Glycerine Producers' Association), available on the website: https://www.aciscience.org/docs/Physical properties of glycerine and its solutions.pdf; | | | | | | |

As can be seen from the obtained characterizations, all the three inert mixtures according to the present invention prepared in Examples 1-3 have shown a phase transition, which is associated with a high phase change enthalpy which is even greater than the phase change enthalpy of the polyol alone, and an adequate crystallization kinetics.

Moreover, the analysis of the calorimetric traces of Figures 1, 2 and 3, could highlight the substantial absence of significant sub-cooling phenomena, as appears from the proximity of the temperatures of crystallization beginning and melting end of the respective mixtures.

## Claims

1. Inert mixture comprising:
- at least one polyol selected from the group consisting of: glycerol, erythritol, mannitol, pentaerythritol, xylitol, dulcitol, sorbitol, ribitol, maltitol, and inositol;
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate; and
- at least one nucleating agent selected from the group consisting of carbon powder, metal powder, and silicon carbide;
wherein:
- the molar ratio of the at least one polyol to the at least one inorganic salt is in the range from 99:1 to 50:50; and
- the at least one nucleating agent is present in the form of particles having a size in the range from 1 to 50 microns, measured by the laser diffractometry method according to the ISO standard 13320:2009 (E).

2. The inert mixture according to claim 1, wherein the at least one polyol is selected from the group consisting of: glycerol, erythritol, mannitol, pentaerythritol, and inositol.

3. The inert mixture according according to claim 1 or 2, having a phase transition enthalpy equal to or greater than 150 kJ/kg.

4. The inert mixture according to any one of claims 1 to 3, having at least one phase transition at a temperature in the range from - 40 °C to 200 °C.

5. The inert mixture according to any one of claims 1 to 4, wherein the at least one polyol is selected from the group consisting of: glycerol, erythritol, mannitol, pentaerythritol, dulcitol, sorbitol, maltitol, and inositol; and wherein the molar ratio between said at least one polyol and the at least one inorganic salt is in the range from 99:1 to 60:40.

6. The inert mixture according to claim 5, comprising an amount of glycerol equal to or less than 5% by moles, with respect to the total moles of the at least one polyol.

7. The inert mixture according to claim 5 or 6, having a water content equal to or less than 2% by moles, with respect to the total moles of the inert mixture.

8. The inert mixture according to anyone of claims 1 to 4, wherein the at least one polyol is selected from the group consisting of: glycerol, erythritol, xylitol, sorbitol, ribitol, maltitol, and inositol; and wherein the molar ratio between said at least one polyol and the at least one inorganic salt is in the range from 99:1 to 50:50.

9. The inert mixture according to claim 8, comprising an amount of glycerol greater or equal to 10% by moles, with respect to the total moles of the at least one polyol.

10. The inert mixture according to claim 8 or 9, having water content ef ranging from 10% to 40% by moles, with respect to the total moles of the inert mixture.

11. Use of the inert mixture according to any one of claims 1 to 10 to store thermal energy.

12. Use of the inert mixture according to any one of claims 5 to 7, to store thermal energy in a temperature window comprised between 45 °C and 200 °C.

13. Use of the inert mixture according to any one of claims 8 to 10, to store thermal energy in a temperature window comprised between -40 °C and 45 °C.

14. Use of the inert mixture according to any one of claims 11 to 13 as phase change material.

## Patentansprüche

1. Inerte Mischung, die Folgendes umfasst:
- mindestens ein Polyol, ausgewählt aus der Gruppe bestehend aus: Glycerin, Erythrit, Mannit, Pentaerythrit, Xylit, Dulcit, Sorbit, Ribit, Maltit und Inosit;
- mindestens ein anorganisches Salz, das in dem Polyol löslich ist, wobei das anorganische Salz aus mindestens einem Metall, ausgewählt aus der Gruppe bestehend aus: Lithium, Natrium, Kalium, Calcium, Magnesium, Strontium, Barium, Titan, Vanadium, Chrom, Mangan, Eisen, Kobalt, Nickel, Kupfer, Zink und Aluminium, und aus mindestens einem Anion, ausgewählt aus der Gruppe bestehend aus: einem Halogenid, einem Silikat und einem Sulfat, besteht; und
- mindestens einem Keimbildner, ausgewählt aus der Gruppe bestehend aus Kohlenstoffpulver, Metallpulver und Siliciumcarbid;
wobei:
- das molare Verhältnis des mindestens einen Polyols zu dem mindestens einen anorganischen Salz im Bereich von 99:1 bis 50:50 liegt; und
- der mindestens eine Keimbildner in Form von Teilchen vorliegt, die eine Größe im Bereich von 1 bis 50 Mikrometer aufweisen, gemessen mit dem Laserbeugungsverfahren gemäß der ISO-Norm 13320:2009 (E).

2. Inerte Mischung gemäß Anspruch 1, wobei das mindestens eine Polyol ausgewählt ist aus der Gruppe bestehend aus: Glycerin, Erythrit, Mannit, Pentaerythrit und Inosit.

3. Inerte Mischung gemäß Anspruch 1 oder 2, die eine Phasenübergangsenthalpie gleich oder größer als 150 kJ/kg aufweist.

4. Inerte Mischung gemäß einem der Ansprüche 1 bis 3, die mindestens einen Phasenübergang bei einer Temperatur im Bereich von - 40 °C bis 200 °C aufweist.

5. Inerte Mischung gemäß einem der Ansprüche 1 bis 4, wobei das mindestens eine Polyol ausgewählt ist aus der Gruppe bestehend aus: Glycerin, Erythrit, Mannit, Pentaerythrit, Dulcit, Sorbit, Maltit und Inosit; und wobei das Molverhältnis zwischen dem mindestens einen Polyol und dem mindestens einen anorganischen Salz im Bereich von 99:1 bis 60:40 liegt.

6. Inerte Mischung gemäß Anspruch 5, die eine Menge an Glycerin von gleich oder weniger als 5 Mol-%, bezogen auf die Gesamtmolzahl des mindestens einen Polyols, umfasst.

7. Inerte Mischung gemäß Anspruch 5 oder 6, die einen Wassergehalt von gleich oder weniger als 2 Mol-%, bezogen auf die Gesamtmolzahl der inerten Mischung, aufweist.

8. Inerte Mischung gemäß einem der Ansprüche 1 bis 4, wobei das mindestens eine Polyol ausgewählt ist aus der Gruppe bestehend aus: Glycerin, Erythrit, Xylit, Sorbit, Ribit, Maltit und Inosit; und wobei das Molverhältnis zwischen dem mindestens einen Polyol und dem mindestens einen anorganischen Salz im Bereich von 99:1 bis 50:50 liegt.

9. Inerte Mischung gemäß Anspruch 8, die eine Menge an Glycerin von gleich oder mehr als 10 Mol-%, bezogen auf die Gesamtmolzahl des mindestens einen Polyols, umfasst.

10. Inerte Mischung gemäß Anspruch 8 oder 9, die einen Wassergehalt im Bereich von 10 bis 40 Mol-%, bezogen auf die Gesamtmolzahl der inerten Mischung, aufweist.

11. Verwendung der inerten Mischung gemäß einem der Ansprüche 1 bis 10 zur Speicherung von Wärmeenergie.

12. Verwendung der inerten Mischung gemäß einem der Ansprüche 5 bis 7 zur Speicherung von Wärmeenergie in einem Temperaturfenster, das zwischen 45 °C und 200 °C umfasst.

13. Verwendung der inerten Mischung gemäß einem der Ansprüche 8 bis 10 zur Speicherung von Wärmeenergie in einem Temperaturfenster, das zwischen -40 °C und 45 °C umfasst.

14. Verwendung der inerten Mischung gemäß einem der Ansprüche 11 bis 13 als Phasenwechselmaterial.

## Revendications

1. Mélange inerte comprenant :
- au moins un polyol sélectionné parmi le groupe constitué : du glycérol, de l'érythritol, du mannitol, du pentaérythritol, du xylitol, du dulcitol, du sorbitol, du ribitol, du maltitol et de l'inositol ;
- au moins un sel inorganique soluble dans ledit polyol, ledit sel inorganique étant d'au moins un métal sélectionné parmi le groupe constitué : du lithium, du sodium, du potassium, du calcium, du magnésium, du strontium, du baryum, du titane, du vanadium, du chrome, du manganèse, du fer, du cobalt, du nickel, du cuivre, du zinc et de l'aluminium et d'au moins un anion sélectionné parmi le groupe constitué : d'un halogénure, d'un silicate et d'un sulfate ; et
- au moins un agent de nucléation sélectionné parmi le groupe constitué de la poudre de carbone, d'une poudre métallique et du carbure de silicium ;
dans lequel :
- le rapport molaire de l'au moins un polyol sur l'au moins un sel inorganique est dans la plage de 99:1 à 50:50 ; et
- l'au moins un agent de nucléation est présent sous la forme de particules ayant une taille dans la plage de 1 à 50 microns, mesurée par la méthode de diffractométrie par laser selon la norme ISO 13320:2009 (E).

2. Mélange inerte selon la revendication 1, dans lequel l'au moins un polyol est sélectionné parmi le groupe constitué : du glycérol, de l'érythritol, du mannitol, du pentaérythritol et de l'inositol.

3. Mélange inerte selon la revendication 1 ou 2, ayant une enthalpie de transition de phase égale ou supérieure à 150 kJ/kg.

4. Mélange inerte selon l'une quelconque des revendications 1 à 3, ayant au moins une transition de phase à une température dans la plage de - 40 °C à 200 °C.

5. Mélange inerte selon l'une quelconque des revendications 1 à 4, dans lequel l'au moins un polyol est sélectionné parmi le groupe constitué : du glycérol, de l'érythritol, du mannitol, du pentaérythritol, du dulcitol, du sorbitol, du maltitol et de l'inositol ; et dans lequel le rapport molaire entre ledit au moins un polyol et l'au moins un sel inorganique est dans la plage de 99:1 à 60:40.

6. Mélange inerte selon la revendication 5, comprenant une quantité de glycérol égale ou inférieure à 5 % en moles, par rapport aux moles totales de l'au moins un polyol.

7. Mélange inerte selon la revendication 5 ou 6, ayant une teneur en eau égale ou inférieure à 2% en moles, par rapport aux moles totales du mélange inerte.

8. Mélange inerte selon l'une quelconque des revendications 1 à 4, dans lequel l'au moins un polyol est sélectionné parmi le groupe constitué : du glycérol, de l'érythritol, du xylitol, du sorbitol, du ribitol, du maltitol et de l'inositol ; et dans lequel le rapport molaire entre ledit au moins un polyol et l'au moins un sel inorganique est dans la plage de 99:1 à 50:50.

9. Mélange inerte selon la revendication 8, comprenant une quantité de glycérol supérieure ou égale à 10 % en moles, par rapport aux moles totales de l'au moins un polyol.

10. Mélange inerte selon la revendication 8 ou 9, ayant une teneur en eau allant de 10 % à 40 % en moles, par rapport aux moles totales du mélange inerte.

11. Utilisation du mélange inerte selon l'une quelconque des revendications 1 à 10 pour stocker de l'énergie thermique.

12. Utilisation du mélange inerte selon l'une quelconque des revendications 5 à 7, pour stocker de l'énergie thermique dans une fenêtre de température comprise entre 45 °C et 200 °C.

13. Utilisation du mélange inerte selon l'une quelconque des revendications 8 à 10, pour stocker de l'énergie thermique dans une fenêtre de température comprise entre -40 °C et 45 °C.

14. Utilisation du mélange inerte selon l'une quelconque des revendications 11 à 13 comme matériau à changement de phase.
